# EUROPEAN PATENT SPECIFICATION

(11) **EP 3 860 222 B1**
(45) Date of publication and mention of the grant of the patent: **23.08.2023**
(21) Application number: 20154354.3
(22) Date of filing: 29.01.2020
(51) Int. Cl.: H04W 36/30

(54) **METHOD FOR ENHANCING CONTINUITY OF DATA TRANSMISSIONS AND/OR FOR REDUCING INTERRUPTION OR INTERRUPTION PERIODS OF DATA TRANSMISSIONS BETWEEN A USER EQUIPMENT AND A MOBILE COMMUNICATION NETWORK, SYSTEM, USER EQUIPMENT, PROGRAM AND COMPUTER-READABLE MEDIUM**
VERFAHREN ZUR VERBESSERUNG DER KONTINUITÄT VON DATENÜBERTRAGUNGEN UND/ODER ZUR VERRINGERUNG VON UNTERBRECHUNGEN ODER UNTERBRECHUNGSPHASEN VON DATENÜBERTRAGUNGEN ZWISCHEN EINEM BENUTZERGERÄT UND EINEM MOBILKOMMUNIKATIONSNETZWERK, SYSTEM, BENUTZERGERÄT, PROGRAMM UND COMPUTERLESBARES MEDIUM
PROCÉDÉ D'AMÉLIORATION DE LA CONTINUITÉ DE TRANSMISSIONS DE DONNÉES ET/OU DE RÉDUCTION D'INTERRUPTION OU DE PÉRIODES D'INTERRUPTION DE TRANSMISSIONS DE DONNÉES ENTRE UN ÉQUIPEMENT UTILISATEUR ET UN RÉSEAU DE COMMUNICATION MOBILE, SYSTÈME, ÉQUIPEMENT UTILISATEUR, PROGRAMME ET SUPPORT LISIBLE PAR ORDINATEUR

(43) Date of publication of application: 04.08.2021
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- US-A1- 2008 220 784
- US-B2- 9 565 610
- US-B2- 9 661 509
- ERICSSON: "Mobility enhancements NB-IoT", 3GPP DRAFT; R2-165159 MOBILITY ENHANCEMENTS NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126773, Retrieved from the Internet: URL:http://www.3gpp.org/ftp/Meetings_3GPP_ SYNC/RAN2/Docs/ [retrieved on 2016-08-21]

## Description

### BACKGROUND

The present invention relates to a method for enhancing continuity of data transmissions and/or for reducing interruption or interruption periods of data transmissions between a user equipment and a mobile communication network.

Furthermore, the present invention relates to a system for enhancing continuity of data transmissions and/or for reducing interruption or interruption periods of data transmissions between a user equipment and a mobile communication network.

Additionally, the present invention relates to a user equipment for enhancing continuity of data transmissions and/or for reducing interruption or interruption periods of data transmissions between the user equipment and a mobile communication network.

Furthermore, the present invention relates to a program comprising a computer readable program code, and to a computer-readable medium comprising instructions which when executed help to perform an inventive method.

Presently, a number of use cases or applications within mobile communication networks do not necessarily require the complete functionality of, e.g., modern user equipments such as smart phones or other personal assistant devices. Hence, for certain device categories, an extremely stripped-down functionality level has is applied for certain devices such as narrowband internet-of-things devices or other machine type communication devices - typically in order to reduce energy consumption of such devices, typically powered by batteries, and, as a result, to enhance battery life. One aspect of such an intentionally reduced functionality level relates to the lack of certain mobility-related functions or procedures of such specific categories of user equipments, such as, e.g. a lack of availability of handover procedures and/or mechanisms while such user equipments are connected to the mobile communication network, i.e. typically towards a specific (serving) base station entity of the (access network of the) mobile communication network.

For conventionally known such user equipments, such an intentional limitation of features or functionalities typically means that - in case that mobility happens, leading to a deterioration of the radio link towards the serving base station entity, while the user equipment is in connected mode or while a transmission is occurring between the user equipment and the respective base station entity - a radio link failure procedure is used to resume the connection and/or transmission with another base station entity.

The drawback of such a situation is that, typically, the interruption of the data transmission, due to invoking, by the user equipment, the radio link failure procedure, is comparably large, leading, inter alia, to an increased power consumption of the user equipment and/or to an increased latency in the transmission of data from the user equipment to the mobile communication network. In the general context of mobility enhancements, discussion paper R2-165159 (3GPP TSG-RAN2 Meeting #95, Gothenburg, Sweden, 22 - 26 August 2016) outlines potential drawbacks and possible enhancements of REL-13 connected mode mobility of the narrow band internet-of-things.

### SUMMARY

An object of the present invention is to provide a method, a system, and a user equipment for enhancing continuity of data transmissions and/or for reducing interruption or interruption periods of data transmissions between a user equipment and a mobile communication network. Additionally, objects of the present invention relate to a program comprising a computer readable program code, and to a computer-readable medium comprising instructions which when executed help to perform an inventive method.

The object of the present invention is achieved by a method according to claim 1.

According to the present invention, it is advantageously possible to enhance the continuity of data transmissions and/or to reduce the interruption or the interruption periods of data transmissions between a user equipment on the one hand, and a mobile communication network on the other hand, i.e. typically a base station entity of the mobile communication network (hereinafter normally called first base station entity). Thereby, it is advantageously possible to enhance not only the continuity of data transmissions and/or to reduce the interruption or the interruption periods thereof but also to reduce battery drainage or power consumption of the user equipment concerned as well as overhead communication and associated network load linked to eventually unsuccessful attempts to establish a radio communication link to another base station entity of the mobile communication network (hereinafter typically called second base station entity).

According to the present invention, it is advantageously possible that - prior to actually being required, due to severe deterioration or complete radio link failure, to initiate or trigger the radio link failure procedure - a preparation stage for or in view of the radio link failure procedure is able to be initiated by the user equipment, and this not in a completely autonomous manner and dissociated from the mobile communication network but by using guidance obtained from the mobile communication network (typically transmitted by a base station entity, and/or received from the respective radio resources entity or entity responsible for mobility management).

Hence, the present invention relates to the situation that the user equipment, while being in connected mode and being served by a base station entity, measures or detects a deterioration of the radio communication link to and/or from the first base station entity, wherein a radio link failure procedure is initiated in case of a sufficiently strong deterioration of the radio communication link to and/or from the first base station entity - especially in case of the user equipment moving geographically within the radio coverage area of or associated with the respective serving base station entity, i.e. in a mobility-related deterioration of the radio communication link. In such a situation, in order for the user equipment being able to continue to communicate with the mobile communication network, a further base station entity (i.e. especially a second base station entity) needs to be found.

According to the present invention, in a first step, the user equipment receives a radio link threshold indication from the mobile communication network, i.e. typically from the serving base station entity (or the first base station entity). The radio link threshold indication is related to at least one radio link quality parameter and indicates a threshold value regarding the at least one radio link quality parameter. In a second step according to the inventive method, subsequent to the first step, the user equipment initiates - in order to enhance continuity of an occurring data transmission and/or for reducing interruption or interruption periods of an occurring data transmission with the first base station entity - a preparation stage for the radio link failure procedure in case that a measurement or a determination regarding the at least one radio link quality parameter indicates a worse radio communication link quality compared to the threshold value of the radio link threshold indication.

In recent years, narrow band internet-of-things technology (NB-loT technology) has been developed by 3GPP to provide an efficient, power optimized and cost reduced radio system for the support of simple internet-of-things applications, such as sensors. The characteristics of the NB-loT system are driven from extremely stripped-down functionality compared to regular cellular systems like UMTS or LTE. The simplification principle also touched the classical mobility management in cellular networks which is normally based on the procedure of "cell reselection" while the user equipment is in idle mode, or network controlled handover while the user equipment is in connected mode. According to narrow band internet-of-things technology, only cell selection is applied for idle user equipments as mobility events or mobile user equipments conventionally happened comparatively rarely and in connected mode the "Radio Link Failure" procedure is used, which is basically based on a loss of (the radio connection towards) the serving cell and a Radio Link Reestablishment towards a target cell. As typically the time of a narrow band internet-of-things technology device spending in connected mode is quite limited (due, typically, to the small amount of data to be transferred) and, typically, cell changes during this time interval are quite limited, this approach does not provide large drawbacks but enables a very simple system design.

Recently however, new requirements for narrow band internet-of-things technology emerged which result in the situation where cell changes during connected mode are happening more often than according to the initial narrow band internet-of-things technology design considered. The issue with radio link failure-based mobility approach - while simple on the network and device side; as no handover needs to be performed - results in more frequent interruption times while changing the cell with the radio link failure procedure. As the user equipment will stay connected at the old radio cell (i.e. the first base station entity) as long as it is acceptable good, the user equipment starts searching for a new target cell (i.e. the second base station entity) only once the radio link failure occurred on the current serving cell. No measurement reporting from the user equipment to the network and handover instruction is applied.

In order to overcome the mentioned drawback, it is proposed according to the present invention to keep the simplicity principle of the narrow band internet-of-things system design and to add a simple indication (i.e. the radio link threshold indication) to the user equipment to speed up the cell selection process after the radio link failure event. According to the present invention the radio link threshold indication is used for a cell selection procedure (or for a preparation stage for the cell selection procedure) of the user equipment (while in idle mode) upon the user equipment measuring or detecting a deterioration of the radio communication link (or of the radio signals received from the first base station entity) beyond the level indicated by the radio link threshold indication, or to initiate a cell selection procedure in case that a sufficiently strong deterioration of the radio communication link (or of the radio signals received from the first base station entity) is determined or measured by the user equipment (comparable to a level that would otherwise, in connected mode of the user equipment, would have resulted in the initiation of the radio link failure procedure).

According to the present invention, prior to the second step, especially prior to, during or after the first step, the user equipment receives a radio cell list indication, the radio cell list indication being related to a set or a list of radio cells or base station entities - potential target cells - that might potentially serve the user equipment after the radio communication link between the user equipment and the first base station entity is interrupted, wherein - during the second step and either as part of the preparation stage for the radio link failure procedure, or as part of the radio link failure procedure - the radio cell list indication is used for prioritized measurements and the potential establishment of a radio communication link after a radio link failure with the first base station entity.
Hence it is proposed to define the signaling from the mobile communication network towards the user equipment twofold: (1) The user equipment is predefined with a threshold of the serving cell quality (i.e. the radio link threshold indication; e.g. if the serving cell quality is fallen under that threshold, the user equipment starts preparing the radio link failure event). (2) The user equipment is additionally provided with a list of candidate radio cells the user equipment should consider to select if the radio link failure on the current serving cell (i.e. the first base station entity) really happens.

It is thereby advantageously possible according to the present invention that the user equipment already knows - during the radio link failure process - which cell or which plurality of cells would be enabled as potential target cell(s) for selection. Based on the in advance-knowledge and the potentially already performed cell identification, the entire radio link failure process as well as the radio link failure recovery process is shorted, resulting into a minimized data-transmission interruption.

According to the present invention, the radio cell list indication is related to a set or a list of radio cells or base station entities - potential target cells - that might potentially serve the user equipment after the radio communication link between the user equipment and a neighbor radio cell of the first base station entity is interrupted.

It is thereby advantageously possible for the user equipment to establish a radio connection with the mobile communication network (but typically via a different base station entity compared to the first base station entity, such as the second base station entity) more quickly, and, hence, to reduce interruption or interruption periods of the data transmission.

According to an embodiment of the present invention, in view of the potential establishment of a radio communication link with the second base station entity, especially due to mobility of the user equipment, prioritized measurements are performed during the preparation stage for the radio link failure procedure,
wherein especially the user equipment initiates and/or performs cell search and/or cell identification procedures during the preparation stage for the radio link failure procedure and/or at a point in time where actual radio link failure with the first base station entity has not yet occurred,
wherein especially during the preparation stage for the radio link failure procedure and/or prior to the user equipment actually initiating a radio link failure procedure, the user equipment performs cell identification of at least one radio cell or base station entity, especially the second base station entity, that might potentially serve the user equipment, especially after the radio communication link between the user equipment and the first base station entity is interrupted.

Thereby, it is advantageously possible to provide a quicker re-connection of the user equipment with the mobile communication network. This is especially realized by means of already starting the procedures to search radio cells and/or to identify radio cells at a point in time when the radio link towards the first base station entity is still available and active (i.e. its quality might be deteriorated, however, the quality of the radio link is not yet as poor as to start a radio link failure procedure). It is particularly preferred according to the present invention that the user equipment performs cell identification of a base station entity that could serve the user equipment after the radio communication link between the user equipment and the first base station entity is interrupted.

According to the present invention, in a third step, subsequent to the second step, the user equipment initiates a radio link failure procedure in case of a sufficiently strong deterioration of the radio communication link to and/or from the first base station entity, especially leading to an interruption of a data transmission or to an interruption period regarding a data transmission between the user equipment and the mobile communication network upon the user equipment traveling outside of the radio coverage area of the first base station entity.

By means (in the first step) of the preparatory stage for the radio link failure procedure, it is advantageously possible that - while an interruption of the current data transmission (leading to an interruption period regarding this data transmission of the user equipment (i.e. between the user equipment and the mobile communication network) upon the user equipment traveling outside of the radio coverage area of the first base station entity) is almost unavoidable - to provide for preparations (i.e. the preparatory stage) regarding the radio link failure procedure such that the mentioned data transmission interruption is a short as possible - and this without the need to provide the user equipment with conventionally known handover functionality that would lead in dramatically increasing the complexity (and, hence, costs as well as, typically, additional power consumption) of the user equipment. Typically, a handover procedure involves indicating the target radio cell (e.g. the second base station entity) to the user equipment. This is normally based on measurements having been performed, by the user equipment, prior to the handover event or procedure, and - in an attempt to minimize interruptions of data transmissions of the user equipment - the mobile communication network strives to prepare the target radio cell to serve the user equipment (subsequently to the user equipment being served by the first base station entity). However, according to the present invention, comparatively short interruptions of data traffic between the user equipment and the mobile communication network are not as important (or critical) - especially compared to, e.g., other kinds of low-latency data transmissions, such as, e.g., voice transmissions -, that adding the required complexity for handover functionality would be warranted.

According to the present invention, it is furthermore preferred that the radio link threshold indication is related to at least one out of the following radio link quality indicators:
-- the number of re-transmissions or an indication that the number of re-transmissions is increased or is currently increasing,
-- the number of out-of-sync events or an indication that the number of out-of-sync events is increased or is currently increasing,
-- the value of the reference signal received power, RSRP,
-- the value of the received signal strength indicator, RSSI,
-- the value of the reference signal received quality, RSRQ,
-- the value of the signal to interference plus noise ratio, SINR,
wherein especially the radio link threshold indication specifies - regarding one or a plurality of radio link quality indicators, respectively - a threshold value:
-- wherein either the threshold value corresponds to a quality level of the radio link between the user equipment and the first base station entity, wherein the quality level is in between the best conceivable quality on the one hand, and a quality level that would trigger radio link failure procedure on the other hand, and/or
-- wherein the threshold value corresponds to a deterioration trend threshold value, the deterioration trend threshold value corresponding to a quality decrease per time interval of the radio link between the user equipment and the first base station entity, while the quality level of this radio link nevertheless being above, or better than, the quality level that would trigger radio link failure procedure.

Thereby, it is advantageously possible that the radio link threshold indication relates to a meaningful radio link quality indicator or to a meaningful combination of a plurality of different radio link quality indicators.

According to the present invention, at least one piece of information out of the radio link threshold indication and the radio cell list indication is transmitted, by the first base station entity, to the user equipment in a dedicated manner, wherein a further user equipment receives, likewise transmitted by the first base station entity, the radio link threshold indication and/or the radio cell list indication also in a dedicated manner but referring to different respective values or a different content of the radio link threshold indication and/or the radio cell list indication,
wherein especially the radio link threshold indication and/or the radio cell list indication is dynamically updated, especially in dependency of the geographical location of the user equipment and/or of other triggers, especially load balancing.

Thereby, by means of applying a dedicated transmission approach, it is advantageously possible to selectively indicate thresholds and target cells to different user equipments to allow individual mobility management decisions.

According to still a further preferred embodiment of the present invention, the prioritized measurements are performed exclusively related to the radio cells or base station entities referred to by the radio cell list indication, especially during the preparation stage for the radio link failure procedure and/or at a point in time where actual radio link failure with the first base station entity has not yet occurred, wherein especially, the radio cell list indication is related to a comparatively low number of radio cells, typically in the vicinity of the first base station entity, wherein especially the radio cell list indication is related to only one radio cell or two radio cells or three radio cells.

Thereby, it is advantageously possible according to the present invention that preparatory measurements (in view of a potential radio link failure) are able to be reduced or limited to such radio cells or base station entities referred to by the radio cell list indication, thereby reducing the required power spent on such measurements. Especially, it is preferred that only a comparatively low number of potential target base station entities or radio cells are referred to by the radio cell list indication.

According to the present invention, the user equipment is intentionally unable to perform a handover procedure due to its device category, wherein the user equipment especially is machine type communication device and/or a narrow band internet-of-things device.

Thereby, it is advantageously possible to provide an enhance mobility support for such categories of user equipments.

The present invention also relates to a system according to claim 8.

By means of such a system, it is advantageously possible to enhance the continuity of data transmissions and/or to reduce the interruption or the interruption periods of data transmissions between a user equipment on the one hand, and a mobile communication network on the other hand. Thereby, it is advantageously possible to enhance not only the continuity of data transmissions and/or to reduce the interruption or the interruption periods thereof but also to reduce battery drainage or power consumption of the user equipment concerned as well as overhead communication and associated network load linked to eventually unsuccessful attempts to establish a radio communication link to another base station entity of the mobile communication network (hereinafter typically called second base station entity).

Additionally, the present invention relates to a user equipment according to claim 9.

By means of such a user equipment, it is advantageously possible to enhance the continuity of data transmissions and/or to reduce the interruption or the interruption periods of data transmissions between a user equipment on the one hand, and a mobile communication network on the other hand.

Furthermore, the present invention relates to a program according to claim 10.

Additionally, the present invention relates to a computer-readable medium according to claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schecmatically illustrates an embodiment of a system and/or mobile communication network according to the present invention comprising a user equipment and a plurality of base station entities.
Figure 2 schematically illustrates an exemplary communication diagram according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

According to the present invention, an improved method for establishing or for facilitating to establish a voice communication session between a first user equipment 21 and a second user equipment 22 is disclosed.

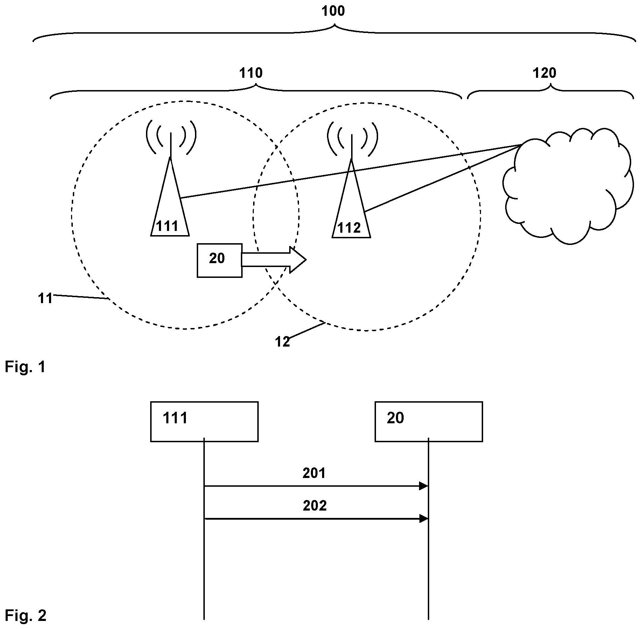

In Figure 1, an exemplary embodiment of a system and/or mobile communication network 100 according to the present invention is schematically shown. The mobile communication network 100 comprises a user equipment 20 that is connected to the mobile communication network 100. In reality, typically a plurality of user equipments 20 are present and connected (or potentially connected) to the mobile communication network 100. Typically and conventionally, the mobile communication network 100 comprises a (mobile) access network 110 or a radio access network 110 as well as a core network 120. The radio access network or (mobile) access network 110 is schematically and exemplarily shown as comprising two base station entities, schematically representing the radio access network, namely a first base station entity 111, and a second base station entity 112. The first base station entity 111 has or serves (or corresponds to) a first radio cell or radio coverage area indicated by means of a dashed circle and reference sign 11, whereas the second base station entity 112 has or serves (or corresponds to) a second radio cell or radio coverage area indicated by means of likewise a dashed circle and reference sign 12. The user equipment 20 or the plurality of user equipments (not represented in Figure 1) use the mobile communication network 100 for communication purposes, especially communication services being provided by the mobile communication network 100, such as data transmission or the like.

According to the present invention, the inventive method, system and/or user equipment or client entity provides for enhancing continuity of data transmissions and/or for reducing interruption or interruption periods of data transmissions between the user equipment 20 and the mobile communication network 100. The mobile communication network 100 comprises or is assigned to a radio access network 110, and the radio access network comprises at least a first base station entity 111 and a second base station entity 112, each one of the base station entities 111, 112 potentially serving the user equipment 20. According to a conventionally known radio link failure mechanism, the user equipment 20 is able to determine a deterioration of the radio communication link (by means of measuring or detecting at least one parameter of the radio communication link to and/or from the first base station entity 111, while being in connected mode and being served by the first base station entity 111), and the user equipment 20 initiates a radio link failure procedure in case of a sufficiently strong deterioration of the radio communication link to and/or from the first base station entity 111. This possibly leads to the user equipment 20 eventually being served by the second base station entity 112 (or another base station entity) instead of the first base station entity 111.

According to the present invention, the method comprises the following steps:
-- in a first step, the user equipment 20 receives a radio link threshold indication 201, the radio link threshold indication 201 being related to at least one radio link quality parameter and indicates a threshold value regarding the at least one radio link quality parameter,
-- in a second step, subsequent to the first step, the user equipment 20 initiates - in order to enhance continuity of an occurring data transmission and/or for reducing interruption or interruption periods of an occurring data transmission with the first base station entity 111 - a preparation stage for the radio link failure procedure in case that a measurement or a determination regarding the at least one radio link quality parameter indicates a worse radio communication link quality compared to the threshold value of the radio link threshold indication 201.

According to the present invention, not only the radio link threshold indication 201 but also a radio cell list indication 202 is received, by the user equipment 20, from the first base station entity 111, the radio cell list indication 202 being related to a set or a list of radio cells or base station entities - potential target cells - that might potentially serve the user equipment 20 after the radio communication link between the user equipment 20 and the first base station entity 111 is interrupted.

The present invention is directed to user equipments 20 unable to perform a handover procedure (i.e. the user equipments 20 are intentionally unable to perform a handover procedure due to their device category), and especially to narrow band internet-of-things devices and/or machine type communication devices. The application of the present invention is most valuable for this particular cellular radio technology (i.e. narrow band internet-of-things devices and/or machine type communication devices); however, the present invention might also be applied to other technologies, such as LTE and NR (5G).

In Figure 2, an exemplary communication diagram according to the present invention between the first base station entity 111 and the user equipment 20 is schematically shown. In this example, the first base station entity 111 provides or transmits both the radio link threshold indication 201 and the radio cell list indication 202 to the user equipment 20.

The user equipment 20, during the connected mode, receives these indications (i.e. the radio link threshold indication 201 and the radio cell list indication 202). This is - according to the present invention -provided in a dedicated manner, i.e. the respective indications are specifically (or dedicatedly) provided to the user equipment 20 (and are provided differently, i.e. with the indications relating to different values, to other user equipment (not represented in Figures 1 to 3)). Typically, in order to specifically or dedicatedly transmit the radio link threshold indication 201 and/or the radio cell list indication 202, RRC signaling is used via the DCCH channel to provision the "RLF threshold" (radio link threshold indication 201) and the set of candidate cells (radio cell list indication 202) to be considered during (or after) the radio link failure procedure. The content of the radio link threshold indication 201 might be, e.g., a "serving cell quality radio link failure threshold" referring to one or a plurality of radio link quality parameters such as RSRP (reference signal received power), SINR (signal to interference plus noise ratio) or the like. Furthermore, as part of the radio cell list indication 202, a set of potential target (radio) cells (such as, e.g., three different radio cells or base station entities "1", "2", and "3") for "Serving cell RLF" - i.e. to indicate potential target cells in case the user equipment 20 has been previously connected to the first base station entity 111 -, and a set of potential target (radio) cells for a set of neighbor cells - i.e. to indicate potential target cells in case the user equipment 20 has been previously connected to one of the neighbor cells (e.g. neighbor cells "A", "B", and "C") of the first base station entity 111, e.g. cells "1", "2", "3", "4" as targets from neighbor cell "A", cells "1", "4", "5", "6", and "7" as targets from neighbor cell "B", and cells "4", "6", "7", "8", and "9" as targets from neighbor cell "C".

According to the present invention, it is furthermore preferred that for a mobile user equipment 20 the set of radio link quality parameters or values thereof (cf. the example provided) will be updated dynamically by the network (RAN) depending on the geographical location or other triggers (e.g. for load balancing).

## Claims

1. Method for enhancing continuity of data transmissions and/or for reducing interruption or interruption periods of data transmissions between a user equipment (20) and a mobile communication network (100), the mobile communication network (100) comprising or being assigned to a radio access network (110), the radio access network comprising at least a first base station entity (111) and a second base station entity (112), each one of the base station entities (111, 112) potentially serving the user equipment (20),
wherein the user equipment (20) is intentionally unable to perform a handover procedure due to its device category, wherein - upon the user equipment (20), while being in connected mode and being served by the first base station entity (111), measuring or detecting a deterioration of the radio communication link to and/or from the first base station entity (111) - the user equipment (20) initiates a radio link failure procedure in case of a sufficiently strong deterioration of the radio communication link to and/or from the first base station entity (111), possibly leading to the user equipment (20) eventually being served by the second base station entity (112) instead of the first base station entity (111),
wherein the method comprises the following steps:
-- in a first step, the user equipment (20) receives a radio link threshold indication (201), the radio link threshold indication (201) being related to at least one radio link quality parameter and indicates a threshold value regarding the at least one radio link quality parameter,
-- in a second step, subsequent to the first step, the user equipment (20) initiates - in order to enhance continuity of an occurring data transmission and/or for reducing interruption or interruption periods of an occurring data transmission with the first base station entity (111) - a preparation stage for the radio link failure procedure in case that a measurement or a determination regarding the at least one radio link quality parameter indicates a worse radio communication link quality compared to the threshold value of the radio link threshold indication (201),
-- prior to the second step, the user equipment (20) receives a radio cell list indication (202), the radio cell list indication (202) being related to a set or a list of radio cells or base station entities - potential target cells - that might potentially serve the user equipment (20), after the radio communication link between the user equipment (20) and the first base station entity (111) is interrupted, wherein the potential target cells comprise a target cell controlled by the second base station entity (112), wherein - during the second step and either as part of the preparation stage for the radio link failure procedure, or as part of the radio link failure procedure
- the radio cell list indication (202) is used for prioritized measurements and establishment of a radio communication link after a radio link failure with the first base station entity (111),
-- in a third step, subsequent to the second step, the user equipment (20) initiates the radio link failure procedure in case of a sufficiently strong deterioration of the radio communication link to and/or from the first base station entity (111) and subsequently selects the target cell controlled by the second base station entity (112) and establishes a radio communication link with the second base station entity (112),
**characterized in that**
at least one piece of information out of the radio link threshold indication (201) and the radio cell list indication (202) is transmitted, by the first base station entity (111), to the user equipment (20) in a dedicated manner, and a further user equipment receives, likewise transmitted by the first base station entity (111), the radio link threshold indication (201) and/or the radio cell list indication (202) also in a dedicated manner but referring to different respective values or a different content of the radio link threshold indication (201) and/or the radio cell list indication (202).

2. Method according to one of the preceding claims, wherein, in view of the potential establishment of a radio communication link with the second base station entity (112), especially due to mobility of the user equipment (20), prioritized measurements are performed during the preparation stage for the radio link failure procedure and/or at a point in time where actual radio link failure with the first base station entity (111) has not yet occurred,
wherein especially the user equipment (20) initiates and/or performs cell search and/or cell identification procedures during the preparation stage for the radio link failure procedure and/or at a point in time where actual radio link failure with the first base station entity (111) has not yet occurred,
wherein especially during the preparation stage for the radio link failure procedure and/or prior to the user equipment (20) actually initiating a radio link failure procedure, the user equipment (20) performs cell identification of at least one radio cell or base station entity, especially the second base station entity (112), that might potentially serve the user equipment (20), especially after the radio communication link between the user equipment (20) and the first base station entity (111) is interrupted.

3. Method according to one of the preceding claims, wherein the radio link failure procedure leads to an interruption of a data transmission or to an interruption period regarding a data transmission between the user equipment (20) and the mobile communication network (100) upon the user equipment (20) traveling outside of the radio coverage area of the first base station entity (111).

4. Method according to one of the preceding claims, wherein the radio link threshold indication (201) is related to at least one out of the following radio link quality indicators:
-- the number of re-transmissions or an indication that the number of re-transmissions is increased or is currently increasing,
-- the number of out-of-sync events or an indication that the number of out-of-sync events is increased or is currently increasing,
-- the value of the reference signal received power, RSRP,
-- the value of the received signal strength indicator, RSSI,
-- the value of the reference signal received quality, RSRQ,
-- the value of the signal to interference plus noise ratio, SINR,
wherein especially the radio link threshold indication (201) specifies - regarding one or a plurality of radio link quality indicators, respectively - a threshold value:
-- wherein either the threshold value corresponds to a quality level of the radio link between the user equipment (20) and the first base station entity (111), wherein the quality level is in between the best conceivable quality on the one hand, and a quality level that would trigger radio link failure procedure on the other hand, and/or
-- wherein the threshold value corresponds to a deterioration trend threshold value, the deterioration trend threshold value corresponding to a quality decrease per time interval of the radio link between the user equipment (20) and the first base station entity (111), while the quality level of this radio link nevertheless being above, or better than, the quality level that would trigger radio link failure procedure.

5. Method according to one of the preceding claims, wherein the radio link threshold indication (201) and/or the radio cell list indication (202) is dynamically updated, especially in dependency of the geographical location of the user equipment (20) and/or of other triggers, especially load balancing.

6. Method according to one of the preceding claims, wherein the prioritized measurements are performed exclusively related to the radio cells or base station entities referred to by the radio cell list indication (202), especially during the preparation stage for the radio link failure procedure and/or at a point in time where actual radio link failure with the first base station entity (111) has not yet occurred, wherein especially, the radio cell list indication (202) is related to a comparatively low number of radio cells, typically in the vicinity of the first base station entity (111), wherein especially the radio cell list indication (202) is related to only one radio cell or two radio cells or three radio cells.

7. Method according to one of the preceding claims, wherein the user equipment (20) is a machine type communication device and/or a narrow band internet-of-things device.

8. System for enhancing continuity of data transmissions and/or for reducing interruption or interruption periods of data transmissions between a user equipment (20) and a mobile communication network (100), the system comprising the mobile communication network (100) and the user equipment (20), the mobile communication network (100) comprising or being assigned to a radio access network (110), the radio access network comprising at least a first base station entity (111) and a second base station entity (112), each one of the base station entities (111, 112) potentially serving the user equipment (20),
wherein the user equipment (20) is intentionally unable to perform a handover procedure due to its device category, and is configured such that - upon the user equipment (20), while being in connected mode and being served by the first base station entity (111), measuring or detecting a deterioration of the radio communication link to and/or from the first base station entity (111) - the user equipment (20) initiates a radio link failure procedure in case of a sufficiently strong deterioration of the radio communication link to and/or from the first base station entity (111), possibly leading to the user equipment (20) eventually being served by the second base station entity (112) instead of the first base station entity (111),
wherein the system is configured such that:
-- the user equipment (20) receives a radio link threshold indication (201), the radio link threshold indication (201) being related to at least one radio link parameter and indicates a threshold value regarding the at least one radio link parameter,
-- the user equipment (20) initiates - in order to enhance continuity of an occurring data transmission and/or for reducing interruption or interruption periods of an occurring data transmission with the first base station entity (111) - a preparation stage for the radio link failure procedure in case that a measurement or a determination regarding the at least one radio link parameter indicates a worse radio communication link quality compared to the threshold value of the radio link threshold indication (201),
-- prior to the initiation of the preparation stage, the user equipment (20) receives a radio cell list indication (202), the radio cell list indication (202) being related to a set or a list of radio cells or base station entities - potential target cells - that might potentially serve the user equipment (20), after the radio communication link between the user equipment (20) and the first base station entity (111) is interrupted, wherein the potential target cells comprise a target cell controlled by the second base station entity (112), wherein - either as part of the preparation stage for the radio link failure procedure, or as part of the radio link failure procedure - the radio cell list indication (202) is used for prioritized measurements and establishment of a radio communication link after a radio link failure with the first base station entity (111),
-- subsequent to the initiation of the preparation stage, the user equipment (20) initiates the radio link failure procedure in case of a sufficiently strong deterioration of the radio communication link to and/or from the first base station entity (111) and subsequently selects the target cell controlled by the second base station entity (112) and establishes a radio communication link with the second base station entity,
**characterized in that** the user equipment (20) is configured to receive at least one piece of information out of the radio link threshold indication (201) and the radio cell list indication (202) from the first base station entity (111) in a dedicated manner, and a further user equipment of the system is configured to receive, likewise transmitted by the first base station entity (111), the radio link threshold indication (201) and/or the radio cell list indication (202) also in a dedicated manner but referring to different respective values or a different content of the radio link threshold indication (201) and/or the radio cell list indication (202).

9. User equipment (20) for enhancing continuity of data transmissions and/or for reducing interruption or interruption periods of data transmissions between the user equipment (20) and a mobile communication network (100), the mobile communication network (100) comprising or being assigned to a radio access network (110), the radio access network comprising at least a first base station entity (111) and a second base station entity (112), each one of the base station entities (111, 112) potentially serving the user equipment (20),
wherein the user equipment (20) is intentionally unable to perform a handover procedure due to its device category, and is configured such that - upon the user equipment (20), while being in connected mode and being served by the first base station entity (111), measuring or detecting a deterioration of the radio communication link to and/or from the first base station entity (111) - the user equipment (20) initiates a radio link failure procedure in case of a sufficiently strong deterioration of the radio communication link to and/or from the first base station entity (111), possibly leading to the user equipment (20) eventually being served by the second base station entity (112) instead of the first base station entity (111),
wherein the user equipment (20) is configured such that:
-- the user equipment (20) receives a radio link threshold indication (201), the radio link threshold indication (201) being related to at least one radio link parameter and indicates a threshold value regarding the at least one radio link parameter,
-- the user equipment (20) initiates - in order to enhance continuity of an occurring data transmission and/or for reducing interruption or interruption periods of an occurring data transmission with the first base station entity (111) - a preparation stage for the radio link failure procedure in case that a measurement or a determination regarding the at least one radio link parameter indicates a worse radio communication link quality compared to the threshold value of the radio link threshold indication (201),
-- prior to the initiation of the preparation stage, the user equipment (20) receives a radio cell list indication (202), the radio cell list indication (202) being related to a set or a list of radio cells or base station entities - potential target cells - that might potentially serve the user equipment (20), after the radio communication link between the user equipment (20) and the first base station entity (111) is interrupted, wherein the potential target cells comprise a target cell controlled by the second base station entity (112), wherein - either as part of the preparation stage for the radio link failure procedure, or as part of the radio link failure procedure - the radio cell list indication (202) is used for prioritized measurements and establishment of a radio communication link after a radio link failure with the first base station entity (111),
-- subsequent to the initiation of the preparation stage, the user equipment (20) initiates the radio link failure procedure in case of a sufficiently strong deterioration of the radio communication link to and/or from the first base station entity (111) and subsequently selects the target cell controlled by the second base station entity (112) and establishes a radio communication link with the second base station entity,
charaterized in that the user equipment (20) is configured to receive at least one piece of information out of the radio link threshold indication (201) and the radio cell list indication (202) from the first base station entity (111) in a dedicated manner.

10. Program comprising a computer readable program code which, when executed on a user equipment (20), causes the user equipment (20) to perform a method according to one of claims 1 to 7.

11. Computer-readable medium comprising instructions which when executed on a user equipment (20), causes the user equipment (20) to perform a method according to one of claims 1 to 7.

## Patentansprüche

1. Verfahren zum Verbessern der Kontinuität von Datenübertragungen und/oder zum Reduzieren von Unterbrechung oder Unterbrechungszeiträumen von Datenübertragungen zwischen einer Benutzerausrüstung (20) und einem Mobilkommunikationsnetz (100), wobei das Mobilkommunikationsnetz (100) ein Funkzugangsnetz (110) umfasst oder mit einem Funkzugangsnetz (110) verknüpft ist, wobei das Funkzugangsnetz mindestens eine erste Basisstationsentität (111) und eine zweite Basisstationsentität (112) umfasst, wobei jede der Basisstationsentitäten (111, 112) potenziell die Benutzerausrüstung (20) bedient,
wobei die Benutzerausrüstung (20) aufgrund ihrer Vorrichtungskategorie absichtlich nicht in der Lage ist, ein Übergabe-Procedere durchzuführen, wobei - wenn die Benutzerausrüstung (20), während sie sich im verbundenen Modus befindet und durch die erste Basisstationsentität (111) bedient wird, eine Verschlechterung der Funkkommunikationsstrecke zu und/oder von der ersten Basisstationsentität (111) misst oder detektiert - die Benutzerausrüstung (20) ein Funkstreckenausfall-Procedere im Fall einer ausreichend starken Verschlechterung der Funkkommunikationsstrecke zu und/oder von der ersten Basisstationsentität (111) initiiert, was möglicherweise dazu führt, dass die Benutzerausrüstung (20) schließlich durch die zweite Basisstationsentität (112) statt durch die erste Basisstationsentität (111) bedient wird,
wobei das Verfahren die folgenden Schritte umfasst:
- in einem ersten Schritt empfängt die Benutzerausrüstung (20) eine Funkstreckenschwellenangabe (201), wobei sich die Funkstreckenschwellenangabe (201) auf mindestens einen Funkstreckenqualitätsparameter bezieht und einen Schwellenwert bezüglich des mindestens einen Funkstreckenqualitätsparameters angibt,
- in einem zweiten Schritt, im Anschluss an den ersten Schritt, initiiert die Benutzerausrüstung (20) - um die Kontinuität einer stattfindenden Datenübertragung zu verbessern und/oder um Unterbrechung oder Unterbrechungszeiträume einer stattfindenden Datenübertragung mit der ersten Basisstationsentität (111) zu reduzieren - eine Vorbereitungsstufe für das Funkstreckenausfall-Procedere für den Fall, dass eine Messung oder eine Bestimmung bezüglich des mindestens einen Funkstreckenqualitätsparameters eine schlechtere Funkkommunikationsstreckenqualität im Vergleich zu dem Schwellenwert der Funkstreckenschwellenangabe (201) angibt,
- vor dem zweiten Schritt empfängt die Benutzerausrüstung (20) eine Funkzellenlistenangabe (202), wobei sich die Funkzellenlistenangabe (202) auf einen Satz oder eine Liste von Funkzellen oder Basisstationsentitäten - potentielle Zielzellen - bezieht, die potentiell die Benutzerausrüstung (20) bedienen könnten, nachdem die Funkkommunikationsstrecke zwischen der Benutzerausrüstung (20) und der ersten Basisstationsentität (111) unterbrochen wurde, wobei die potenziellen Zielzellen eine Zielzelle umfassen, die durch die zweite Basisstationsentität (112) gesteuert wird, wobei - während des zweiten Schrittes und entweder als Teil der Vorbereitungsstufe für das Funkstreckenausfall-Procedere oder als Teil des Funkstreckenausfall-Procederes - die Funkzellenlistenangabe (202) für priorisierte Messungen und den Aufbau einer Funkkommunikationsstrecke nach einem Funkstreckenausfall mit der ersten Basisstationsentität (111) verwendet wird,
- in einem dritten Schritt, im Anschluss an den zweiten Schritt, initiiert die Benutzerausrüstung (20) das Funkstreckenausfall-Procedere im Fall einer ausreichend starken Verschlechterung der Funkkommunikationsstrecke zu und/oder von der ersten Basisstationsentität (111) und wählt anschließend die durch die zweite Basisstationsentität (112) gesteuerte Zielzelle aus und baut eine Funkkommunikationsstrecke mit der zweiten Basisstationsentität (112) auf,
**dadurch gekennzeichnet, dass**
mindestens eine Information aus der Funkstreckenschwellenangabe (201) und der Funkzellenlistenangabe (202) durch die erste Basisstationsentität (111) in einer dedizierten Weise an die Benutzerausrüstung (20) gesendet wird und eine weitere Benutzerausrüstung die - gleichfalls durch die erste Basisstationsentität (111) gesendete - Funkstreckenschwellenangabe (201) und/oder Funkzellenlistenangabe (202) ebenfalls in einer dedizierten Weise, jedoch mit Verweis auf andere jeweilige Werte oder einen anderen Inhalt der Funkstreckenschwellenangabe (201) und/oder der Funkzellenlistenangabe (202) empfängt.

2. Verfahren nach einem der vorangehenden Ansprüche, wobei im Hinblick auf den potenziellen Aufbau einer Funkkommunikationsstrecke mit der zweiten Basisstationsentität (112), insbesondere aufgrund der Mobilität der Benutzerausrüstung (20), priorisierte Messungen während der Vorbereitungsstufe für das Funkstreckenausfall-Procedere und/oder an einem Zeitpunkt, an dem der tatsächliche Funkstreckenausfall mit der ersten Basisstationsentität (111) noch nicht stattgefunden hat, durchgeführt werden,
wobei insbesondere die Benutzerausrüstung (20) während der Vorbereitungsstufe für das Funkstreckenausfall-Procedere und/oder an einem Zeitpunkt, an dem der tatsächliche Funkstreckenausfall mit der ersten Basisstationsentität (111) noch nicht aufgetreten ist, Zellensuch- und/oder Zellidentifizierungs-Procedere initiiert und/oder durchführt,
wobei insbesondere die Benutzerausrüstung (20) während der Vorbereitungsstufe für das Funkstreckenausfall-Procedere und/oder vor dem tatsächlichen Initiieren eines Funkstreckenausfall-Procederes durch die Benutzerausrüstung (20) eine Zellenidentifikation mindestens einer Funkzelle oder Basisstationsentität, insbesondere der zweiten Basisstationsentität (112), durchführt, die die Benutzerausrüstung (20) potenziell bedienen könnte, insbesondere nachdem die Funkkommunikationsstrecke zwischen der Benutzerausrüstung (20) und der ersten Basisstationsentität (111) unterbrochen wurde.

3. Verfahren nach einem der vorangehenden Ansprüche, wobei das Funkstreckenausfall-Procedere zu einer Unterbrechung einer Datenübertragung oder zu einem Unterbrechungszeitraum bezüglich einer Datenübertragung zwischen der Benutzerausrüstung (20) und dem Mobilkommunikationsnetz (100) führt, sobald sich die Benutzerausrüstung (20) außerhalb des Funkversorgungsgebietes der ersten Basisstationsentität (111) bewegt.

4. Verfahren nach einem der vorangehenden Ansprüche, wobei sich die Funkstreckenschwellenangabe (201) auf mindestens einen der folgenden Funkstreckenqualitätsindikatoren bezieht:
- die Anzahl der Übertragungswiederholungen oder einen Hinweis darauf, dass die Anzahl der Übertragungswiederholungen gestiegen ist oder momentan steigt,
- die Anzahl der Synchronisationsverlust-Ereignisse oder einen Hinweis darauf, dass die Anzahl der Synchronisationsverlust-Ereignisse gestiegen ist oder momentan steigt,
- den Wert der Referenzsignalempfangsleistung (Reference Signal Received Power, RSRP),
- den Wert des Empfangssignalstärkeindikators (Received Signal Strength Indicator, RSSI),
- den Wert der Referenzsignalempfangsqualität (Reference Signal Received Quality, RSRQ),
- den Wert des Signal-Störung-plus-Rausch-Verhältnisses (Signal to Interference plus Noise Ratio, SINR),
wobei insbesondere die Funkstreckenschwellenangabe (201) - bezüglich eines bzw. mehrerer Funkstreckenqualitätsindikatoren - einen Schwellenwert angibt:
- wobei entweder der Schwellenwert einem Qualitätsniveau der Funkstrecke zwischen der Benutzerausrüstung (20) und der ersten Basisstationsentität (111) entspricht, wobei das Qualitätsniveau zwischen der besten denkbaren Qualität einerseits und einem Qualitätsniveau, das ein Funkstreckenausfall-Procedere auslösen würde, andererseits liegt, und/oder
- wobei der Schwellenwert einem Verschlechterungstrend-Schwellenwert entspricht, wobei der Verschlechterungstrend-Schwellenwert einer Qualitätsabnahme pro Zeitintervall der Funkstrecke zwischen der Benutzerausrüstung (20) und der ersten Basisstationsentität (111) entspricht, während das Qualitätsniveau dieser Funkstrecke trotzdem über dem Qualitätsniveau liegt oder besser als das Qualitätsniveau ist, das ein Funkstreckenausfall-Procedere auslösen würde.

5. Verfahren nach einem der vorangehenden Ansprüche, wobei die Funkstreckenschwellenangabe (201) und/oder die Funkzellenlistenangabe (202) insbesondere in Abhängigkeit vom geographischen Standort der Benutzerausrüstung (20) und/oder von anderen Auslösern, insbesondere einem Lastausgleich, dynamisch aktualisiert werden.

6. Verfahren nach einem der vorangehenden Ansprüche, wobei die priorisierten Messungen ausschließlich in Bezug auf die Funkzellen oder Basisstationsentitäten durchgeführt werden, auf die durch die Funkzellenlistenangabe (202) verwiesen wird, insbesondere während der Vorbereitungsstufe für das Funkstreckenausfall-Procedere und/oder an einem Zeitpunkt, an dem der tatsächliche Funkstreckenausfall mit der ersten Basisstationsentität (111) noch nicht stattgefunden hat, wobei sich insbesondere die Funkzellenlistenangabe (202) auf eine vergleichsweise geringe Anzahl von Funkzellen bezieht, in der Regel in der Nähe der ersten Basisstationsentität (111), wobei sich insbesondere die Funkzellenlistenangabe (202) auf nur eine einzige Funkzelle oder zwei Funkzellen oder drei Funkzellen bezieht.

7. Verfahren nach einem der vorangehenden Ansprüche, wobei die Benutzerausrüstung (20) eine Kommunikationsvorrichtung vom Maschinentyp und/oder eine Schmalband-Internet-of-Things-Vorrichtung ist.

8. System zum Verbessern der Kontinuität von Datenübertragungen und/oder zum Reduzieren von Unterbrechungen oder Unterbrechungszeiträumen von Datenübertragungen zwischen einer Benutzerausrüstung (20) und einem Mobilkommunikationsnetz (100), wobei das System das Mobilkommunikationsnetz (100) und die Benutzerausrüstung (20) umfasst, wobei das Mobilkommunikationsnetz (100) ein Funkzugangsnetz (110) umfasst oder mit einem Funkzugangsnetz (110) verknüpft ist, wobei das Funkzugangsnetz mindestens eine erste Basisstationsentität (111) und eine zweite Basisstationsentität (112) umfasst, wobei jede der Basisstationsentitäten (111, 112) potenziell die Benutzerausrüstung (20) bedient,
wobei die Benutzerausrüstung (20) aufgrund ihrer Vorrichtungskategorie absichtlich nicht in der Lage ist, ein Übergabe-Procedere durchzuführen, und so konfiguriert ist, dass - wenn die Benutzerausrüstung (20), während sie sich im verbundenen Modus befindet und durch die erste Basisstationsentität (111) bedient wird, eine Verschlechterung der Funkkommunikationsstrecke zu und/oder von der ersten Basisstationsentität (111) misst oder detektiert - die Benutzerausrüstung (20) ein Funkstreckenausfall-Procedere im Fall einer ausreichend starken Verschlechterung der Funkkommunikationsstrecke zu und/oder von der ersten Basisstationsentität (111) initiiert, was möglicherweise dazu führt, dass die Benutzerausrüstung (20) schließlich durch die zweite Basisstationsentität (112) statt durch die erste Basisstationsentität (111) bedient wird,
wobei das System so konfiguriert ist, dass:
- die Benutzerausrüstung (20) eine Funkstreckenschwellenangabe (201) empfängt, wobei sich die Funkstreckenschwellenangabe (201) auf mindestens einen Funkstreckenparameter bezieht und einen Schwellenwert bezüglich des mindestens einen Funkstreckenparameters angibt,
- die Benutzerausrüstung (20) - um die Kontinuität einer stattfindenden Datenübertragung zu verbessern und/oder um Unterbrechung oder Unterbrechungszeiträume einer stattfindenden Datenübertragung mit der ersten Basisstationsentität (111) zu reduzieren - eine Vorbereitungsstufe für das Funkstreckenausfall-Procedere für den Fall initiiert, dass eine Messung oder eine Bestimmung bezüglich des mindestens einen Funkstreckenqualitätsparameters eine schlechtere Funkkommunikationsstreckenqualität im Vergleich zu dem Schwellenwert der Funkstreckenschwellenangabe (201) angibt,
- die Benutzerausrüstung (20) vor dem Initiieren der Vorbereitungsstufe eine Funkzellenlistenangabe (202) empfängt, wobei sich die Funkzellenlistenangabe (202) auf einen Satz oder eine Liste von Funkzellen oder Basisstationsentitäten - potentielle Zielzellen - bezieht, die potentiell die Benutzerausrüstung (20) bedienen könnten, nachdem die Funkkommunikationsstrecke zwischen der Benutzerausrüstung (20) und der ersten Basisstationsentität (111) unterbrochen wurde, wobei die potenziellen Zielzellen eine Zielzelle umfassen, die durch die zweite Basisstationsentität (112) gesteuert wird, wobei - entweder als Teil der Vorbereitungsstufe für das Funkstreckenausfall-Procedere oder als Teil des Funkstreckenausfall-Procederes - die Funkzellenlistenangabe (202) für priorisierte Messungen und den Aufbau einer Funkkommunikationsstrecke nach einem Funkstreckenausfall mit der ersten Basisstationsentität (111) verwendet wird,
- die Benutzerausrüstung (20) im Anschluss an das Initiieren der Vorbereitungsstufe das Funkstreckenausfall-Procedere im Fall einer ausreichend starken Verschlechterung der Funkkommunikationsstrecke zu und/oder von der ersten Basisstationsentität (111) initiiert und anschließend die durch die zweite Basisstationsentität (112) gesteuerte Zielzelle auswählt und eine Funkkommunikationsstrecke mit der zweiten Basisstationsentität aufbaut,
**dadurch gekennzeichnet, dass**
die Benutzerausrüstung (20) so konfiguriert ist, dass sie mindestens eine Information aus der Funkstreckenschwellenangabe (201) und der Funkzellenlistenangabe (202) von der ersten Basisstationsentität (111) in einer dedizierten Weise empfängt, und eine weitere Benutzerausrüstung des Systems so konfiguriert ist, dass sie die - gleichfalls durch die erste Basisstationsentität (111) gesendete - Funkstreckenschwellenangabe (201) und/oder Funkzellenlistenangabe (202) ebenfalls in einer dedizierten Weise, jedoch mit Verweis auf andere jeweilige Werte oder einen anderen Inhalt der Funkstreckenschwellenangabe (201) und/oder der Funkzellenlistenangabe (202) empfängt.

9. Benutzerausrüstung (20) zum Verbessern der Kontinuität von Datenübertragungen und/oder zum Reduzieren von Unterbrechung oder Unterbrechungszeiträumen von Datenübertragungen zwischen der Benutzerausrüstung (20) und einem Mobilkommunikationsnetz (100), wobei das Mobilkommunikationsnetz (100) ein Funkzugangsnetz (110) umfasst oder mit einem Funkzugangsnetz (110) verknüpft ist, wobei das Funkzugangsnetz mindestens eine erste Basisstationsentität (111) und eine zweite Basisstationsentität (112) umfasst, wobei jede der Basisstationsentitäten (111, 112) potenziell die Benutzerausrüstung (20) bedient,
wobei die Benutzerausrüstung (20) aufgrund ihrer Vorrichtungskategorie absichtlich nicht in der Lage ist, ein Übergabe-Procedere durchzuführen, und so konfiguriert ist, dass - wenn die Benutzerausrüstung (20), während sie sich im verbundenen Modus befindet und durch die erste Basisstationsentität (111) bedient wird, eine Verschlechterung der Funkkommunikationsstrecke zu und/oder von der ersten Basisstationsentität (111) misst oder detektiert - die Benutzerausrüstung (20) ein Funkstreckenausfall-Procedere im Fall einer ausreichend starken Verschlechterung der Funkkommunikationsstrecke zu und/oder von der ersten Basisstationsentität (111) initiiert, was möglicherweise dazu führt, dass die Benutzerausrüstung (20) schließlich durch die zweite Basisstationsentität (112) statt durch die erste Basisstationsentität (111) bedient wird,
wobei die Benutzerausrüstung (20) so konfiguriert ist, dass:
- die Benutzerausrüstung (20) eine Funkstreckenschwellenangabe (201) empfängt, wobei sich die Funkstreckenschwellenangabe (201) auf mindestens einen Funkstreckenparameter bezieht und einen Schwellenwert bezüglich des mindestens einen Funkstreckenparameters angibt,
- die Benutzerausrüstung (20) - um die Kontinuität einer stattfindenden Datenübertragung zu verbessern und/oder um Unterbrechung oder Unterbrechungszeiträume einer stattfindenden Datenübertragung mit der ersten Basisstationsentität (111) zu reduzieren - eine Vorbereitungsstufe für das Funkstreckenausfall-Procedere für den Fall initiiert, dass eine Messung oder eine Bestimmung bezüglich des mindestens einen Funkstreckenqualitätsparameters eine schlechtere Funkkommunikationsstreckenqualität im Vergleich zu dem Schwellenwert der Funkstreckenschwellenangabe (201) angibt,
- die Benutzerausrüstung (20) vor dem Initiieren der Vorbereitungsstufe eine Funkzellenlistenangabe (202) empfängt, wobei sich die Funkzellenlistenangabe (202) auf einen Satz oder eine Liste von Funkzellen oder Basisstationsentitäten - potentielle Zielzellen - bezieht, die potentiell die Benutzerausrüstung (20) bedienen könnten, nachdem die Funkkommunikationsstrecke zwischen der Benutzerausrüstung (20) und der ersten Basisstationsentität (111) unterbrochen wurde, wobei die potenziellen Zielzellen eine Zielzelle umfassen, die durch die zweite Basisstationsentität (112) gesteuert wird, wobei - entweder als Teil der Vorbereitungsstufe für das Funkstreckenausfall-Procedere oder als Teil des Funkstreckenausfall-Procederes - die Funkzellenlistenangabe (202) für priorisierte Messungen und den Aufbau einer Funkkommunikationsstrecke nach einem Funkstreckenausfall mit der ersten Basisstationsentität (111) verwendet wird,
- die Benutzerausrüstung (20) im Anschluss an das Initiieren der Vorbereitungsstufe das Funkstreckenausfall-Procedere im Fall einer ausreichend starken Verschlechterung der Funkkommunikationsstrecke zu und/oder von der ersten Basisstationsentität (111) initiiert und anschließend die durch die zweite Basisstationsentität (112) gesteuerte Zielzelle auswählt und eine Funkkommunikationsstrecke mit der zweiten Basisstationsentität aufbaut,
**dadurch gekennzeichnet, dass**
die Benutzerausrüstung (20) so konfiguriert ist, dass sie mindestens eine Information aus der Funkstreckenschwellenangabe (201) und der Funkzellenlistenangabe (202) von der ersten Basisstationsentität (111) in einer dedizierten Weise empfängt.

10. Programm, umfassend einen computerlesbaren Programmcode, der, wenn er in einer Benutzerausrüstung (20) ausgeführt wird, die Benutzerausrüstung (20) veranlasst, ein Verfahren nach einem der Ansprüche 1 bis 7 durchzuführen.

11. Computerlesbares Medium, umfassend Instruktionen, die, wenn sie in einer Benutzerausrüstung (20) ausgeführt werden, die Benutzerausrüstung (20) veranlassen, ein Verfahren nach einem der Ansprüche 1 bis 7 durchzuführen.

## Revendications

1. Procédé destiné à améliorer la continuité des transmissions de données et/ou à réduire l'interruption ou les périodes d'interruption des transmissions de données entre un équipement utilisateur (20) et un réseau de communication mobile (100), le réseau de communication mobile (100) comprenant ou étant affecté à un réseau d'accès radio (110), le réseau d'accès radio comprenant au moins une première entité de station de base (111) et une seconde entité de station de base (112), chacune des entités de station de base (111, 112) desservant potentiellement l'équipement utilisateur (20),
dans lequel l'équipement utilisateur (20) est intentionnellement incapable d'effectuer une procédure de transfert intercellulaire en raison de sa catégorie de dispositif, dans lequel - lorsque l'équipement utilisateur (20), tandis qu'il est en mode connecté et qu'il est desservi par la première entité de station de base (111), mesure ou détecte une détérioration de la liaison de communication radio vers et/ou depuis la première entité station de base (111) - l'équipement utilisateur (20) initie une procédure de défaillance de liaison radio en cas de détérioration suffisamment forte de la liaison de communication radio vers et/ou depuis la première entité de station de base (111), conduisant éventuellement à ce que l'équipement utilisateur (20) soit finalement desservi par la seconde entité de station de base (112) au lieu de la première entité de station de base (111),
dans lequel le procédé comprend les étapes suivantes :
- dans une première étape, l'équipement utilisateur (20) reçoit une indication de seuil de liaison radio (201), l'indication de seuil de liaison radio (201) étant liée à au moins un paramètre de qualité de liaison radio et indique une valeur de seuil concernant l'au moins un paramètre de qualité de liaison radio,
- dans une deuxième étape, consécutive à la première étape, l'équipement utilisateur (20) initie - afin d'améliorer la continuité d'une transmission de données en cours et/ou de réduire l'interruption ou les périodes d'interruption d'une transmission de données en cours avec la première entité de station de base (111) - une étape de préparation pour la procédure de défaillance de liaison radio dans le cas où une mesure ou une détermination concernant l'au moins un paramètre de qualité de liaison radio indique une moins bonne qualité de liaison de communication radio par rapport à la valeur de seuil de l'indication de seuil de liaison radio (201),
- avant la deuxième étape, l'équipement utilisateur (20) reçoit une indication de liste de cellules radio (202), l'indication de liste de cellules radio (202) étant liée à un ensemble ou à une liste de cellules radio ou d'entités de station de base - cellules cibles potentielles - qui pourraient potentiellement desservir l'équipement utilisateur (20), après que la liaison de communication radio entre l'équipement utilisateur (20) et la première entité de station de base (111) est interrompue, dans lequel les cellules cibles potentielles comprennent une cellule cible commandée par la seconde entité de station de base (112), dans lequel - au cours de la deuxième étape et soit dans le cadre de l'étape de préparation de la procédure de défaillance de liaison radio, soit dans le cadre de la procédure de défaillance de liaison radio - l'indication de liste de cellules radio (202) est utilisée pour des mesures priorisées et l'établissement d'une liaison de communication radio après une défaillance de liaison radio avec la première entité station de base (111),
- dans une troisième étape, consécutive à la deuxième étape, l'équipement utilisateur (20) initie la procédure de défaillance de liaison radio en cas de dégradation suffisamment forte de la liaison de communication radio vers et/ou depuis la première entité station de base (111) et sélectionne ensuite la cellule cible commandée par la seconde entité de station de base (112) et établit une liaison de communication radio avec la seconde entité de station de base (112),
**caractérisé en ce que**
au moins une information parmi l'indication de seuil de liaison radio (201) et l'indication de liste de cellules radio (202) est transmise, par la première entité station de base (111), à l'équipement utilisateur (20) de manière dédiée, et un autre équipement utilisateur reçoit, également transmise par la première entité de station de base (111), l'indication de seuil de liaison radio (201) et/ou l'indication de liste de cellules radio (202) également de manière dédiée, mais se référant à différentes valeurs respectives ou à un contenu différent de l'indication de seuil de liaison radio (201) et/ou de l'indication de liste de cellules radio (202).

2. Procédé selon l'une des revendications précédentes, dans lequel, compte tenu de l'établissement potentiel d'une liaison de communication radio avec la seconde entité station de base (112), notamment en raison de la mobilité de l'équipement utilisateur (20), des mesures priorisées sont effectuées pendant l'étape de préparation de la procédure de défaillance de liaison radio et/ou à un moment où une défaillance de liaison radio réelle avec la première entité station de base (111) n'a pas encore eu lieu,
dans lequel en particulier l'équipement utilisateur (20) initie et/ou exécute des procédures de recherche de cellules et/ou d'identification de cellules pendant l'étape de préparation pour la procédure de défaillance de liaison radio et/ou à un moment où une défaillance de liaison radio réelle avec la première entité de station de base (111) n'a pas encore eu lieu,
dans lequel, en particulier pendant l'étape de préparation de la procédure de défaillance de liaison radio et/ou avant que l'équipement utilisateur (20) n'initie réellement une procédure de défaillance de liaison radio, l'équipement utilisateur (20) effectue une identification de cellule d'au moins une cellule radio ou une entité de station de base, notamment la seconde entité station de base (112), qui pourrait potentiellement desservir l'équipement utilisateur (20), notamment après une interruption de la liaison de communication radio entre l'équipement utilisateur (20) et la première entité station de base (111) .

3. Procédé selon l'une des revendications précédentes, dans lequel la procédure de défaillance de liaison radio conduit à une interruption d'une transmission de données ou à une période d'interruption concernant une transmission de données entre l'équipement utilisateur (20) et le réseau de communication mobile (100) lorsque l'équipement utilisateur (20) se déplace à l'extérieur de la zone de couverture radio de la première entité de station de base (111) .

4. Procédé selon l'une des revendications précédentes, dans lequel l'indication de seuil de liaison radio (201) est liée à au moins l'un parmi les indicateurs de qualité de liaison radio suivants :
- le nombre de retransmissions ou une indication que le nombre de retransmissions a augmenté ou est en train d'augmenter,
- le nombre d'événements désynchronisés ou une indication que le nombre d'événements désynchronisés a augmenté ou est en train d'augmenter,
- la valeur de la puissance du signal de référence reçu, RSRP,
- la valeur de l'indicateur d'intensité du signal reçu, RSSI,
- la valeur de la qualité du signal de référence reçu, RSRQ,
- la valeur du rapport signal/brouillage plus bruit, SINR,
dans lequel notamment l'indication de seuil de liaison radio (201) spécifie - concernant un ou une pluralité d'indicateurs de qualité de liaison radio, respectivement - une valeur de seuil :
- dans lequel soit la valeur de seuil correspond à un niveau de qualité de la liaison radio entre l'équipement utilisateur (20) et la première entité de station de base (111), dans lequel le niveau de qualité se situe entre la meilleure qualité concevable d'une part, et un niveau de qualité qui déclencherait une procédure de défaillance de liaison radio d'autre part, et/soit
- dans lequel la valeur de seuil correspond à une valeur de seuil de tendance à la détérioration, la valeur de seuil de tendance à la détérioration correspondant à une diminution de la qualité par intervalle de temps de la liaison radio entre l'équipement utilisateur (20) et la première entité station de base (111), tandis que le niveau de qualité de cette liaison radio est néanmoins supérieur à, voire meilleur que, le niveau de qualité qui déclencherait la procédure de défaillance de liaison radio.

5. Procédé selon l'une des revendications précédentes, dans lequel l'indication de seuil de liaison radio (201) et/ou l'indication de liste de cellules radio (202) sont mises à jour de façon dynamique, en particulier en fonction de l'emplacement géographique de l'équipement utilisateur (20) et/ou d'autres déclencheurs, en particulier l'équilibrage de charge.

6. Procédé selon l'une des revendications précédentes, dans lequel les mesures priorisées sont effectuées exclusivement en rapport avec les cellules radio ou les entités de station de base référencées par l'indication de liste de cellules radio (202), notamment lors de l'étape de préparation de la procédure de défaillance de liaison radio et/ou à un moment où une panne de liaison radio réelle avec la première entité de station de base (111) ne s'est pas encore produite, dans lequel en particulier, l'indication de liste de cellules radio (202) est liée à un nombre relativement faible de cellules radio, généralement au voisinage de la première entité de station de base (111), dans lequel en particulier l'indication de liste de cellules radio (202) est liée à une seule cellule radio ou à deux cellules radio ou à trois cellules radio.

7. Procédé selon l'une des revendications précédentes, dans lequel l'équipement utilisateur (20) est un dispositif de communication de type machine et/ou un dispositif Internet des objets à bande étroite.

8. Système pour améliorer la continuité des transmissions de données et/ou pour réduire l'interruption ou les périodes d'interruption des transmissions de données entre un équipement utilisateur (20) et un réseau de communication mobile (100), le système comprenant le réseau de communication mobile (100) et l'équipement utilisateur (20), le réseau de communication mobile (100) comprenant ou étant affecté à un réseau d'accès radio (110), le réseau d'accès radio comprenant au moins une première entité de station de base (111) et une seconde entité de station de base (112), chacune des entités de station de base (111, 112) desservant potentiellement l'équipement utilisateur (20), dans lequel l'équipement utilisateur (20) est intentionnellement incapable d'effectuer une procédure de transfert intercellulaire en raison de sa catégorie de dispositif, et est configuré de telle sorte que - lorsque l'équipement utilisateur (20), tout en étant en mode connecté et étant desservi par la première entité station de base (111), mesure ou détecte une détérioration de la liaison de communication radio vers et/ou depuis la première entité station de base (111) - l'équipement utilisateur (20) initie une procédure de défaillance de liaison radio en cas de détérioration suffisamment forte de la liaison de communication radio vers et/ou depuis la première entité station de base (111), conduisant éventuellement à ce que l'équipement utilisateur (20) soit finalement desservi par la seconde entité station de base (112) au lieu de la première entité de station de base (111),
dans lequel le système est configuré de telle sorte que :
- l'équipement utilisateur (20) reçoit une indication de seuil de liaison radio (201), l'indication de seuil de liaison radio (201) étant liée à au moins un paramètre de liaison radio et indique une valeur de seuil concernant l'au moins un paramètre de liaison radio,
- l'équipement utilisateur (20) initie - afin d'améliorer la continuité d'une transmission de données en cours et/ou de réduire l'interruption ou les périodes d'interruption d'une transmission de données en cours avec la première entité de station de base (111) - une étape de préparation pour la procédure de défaillance de liaison radio dans le cas où une mesure ou une détermination concernant l'au moins un paramètre de liaison radio indique une moins bonne qualité de liaison de communication radio par rapport à la valeur de seuil de l'indication de seuil de liaison radio (201),
- avant le début de l'étape de préparation, l'équipement utilisateur (20) reçoit une indication de liste de cellules radio (202), l'indication de liste de cellules radio (202) étant liée à un ensemble ou à une liste de cellules radio ou d'entités de station de base - cellules cibles potentielles - qui pourraient potentiellement desservir l'équipement utilisateur (20), après que la liaison de communication radio entre l'équipement utilisateur (20) et la première entité de station de base (111) est interrompue, dans lequel les cellules cibles potentielles comprennent une cellule cible commandée par la seconde entité de station de base (112), dans lequel - soit dans le cadre de l'étape de préparation de la procédure de défaillance de liaison radio, soit dans le cadre de la procédure de défaillance de liaison radio - l'indication de liste de cellules radio (202) est utilisée pour des mesures priorisées et l'établissement d'une liaison de communication radio après une défaillance de liaison radio avec la première entité station de base (111),
- après le début de l'étape de préparation, l'équipement utilisateur (20) initie la procédure de défaillance de liaison radio en cas de dégradation suffisamment forte de la liaison de communication radio vers et/ou depuis la première entité station de base (111) et sélectionne ensuite la cellule cible commandée par la seconde entité de station de base (112) et établit une liaison de communication radio avec la seconde entité de station de base,
**caractérisé en ce que** l'équipement utilisateur (20) est configuré pour recevoir au moins une information parmi l'indication de seuil de liaison radio (201) et l'indication de liste de cellules radio (202) à partir de la première entité de station de base (111) de manière dédiée, et un autre équipement utilisateur du système est configuré pour recevoir, également transmise par la première entité de station de base (111), l'indication de seuil de liaison radio (201) et/ou l'indication de liste de cellules radio (202) également de manière dédiée, mais se référant à des valeurs respectives différentes ou à un contenu différent de l'indication de seuil de liaison radio (201) et/ou de l'indication de liste de cellules radio (202) .

9. Équipement utilisateur (20) destiné à améliorer la continuité des transmissions de données et/ou à réduire l'interruption ou les périodes d'interruption des transmissions de données entre l'équipement utilisateur (20) et un réseau de communication mobile (100), le réseau de communication mobile (100) comprenant ou étant affecté à un réseau d'accès radio (110), le réseau d'accès radio comprenant au moins une première entité de station de base (111) et une seconde entité de station de base (112), chacune des entités de station de base (111, 112) desservant potentiellement l'équipement utilisateur (20),
dans lequel l'équipement utilisateur (20) est intentionnellement incapable d'effectuer une procédure de transfert intercellulaire en raison de sa catégorie de dispositif, et est configuré de telle sorte que - lorsque l'équipement utilisateur (20), tandis qu'il est en mode connecté et qu'il est desservi par la première entité de station de base (111), mesure ou détecte une détérioration de la liaison de communication radio vers et/ou depuis la première entité station de base (111) - l'équipement utilisateur (20) initie une procédure de défaillance de liaison radio en cas de détérioration suffisamment forte de la liaison de communication radio vers et/ou depuis la première entité de station de base (111), conduisant éventuellement à ce que l'équipement utilisateur (20) soit finalement desservi par la seconde entité de station de base (112) au lieu de la première entité de station de base (111),
dans lequel l'équipement utilisateur (20) est configuré de telle sorte que :
- l'équipement utilisateur (20) reçoit une indication de seuil de liaison radio (201), l'indication de seuil de liaison radio (201) étant liée à au moins un paramètre de liaison radio et indique une valeur de seuil concernant l'au moins un paramètre de liaison radio,
- l'équipement utilisateur (20) initie - afin d'améliorer la continuité d'une transmission de données en cours et/ou de réduire l'interruption ou les périodes d'interruption d'une transmission de données en cours avec la première entité de station de base (111) - une étape de préparation pour la procédure de défaillance de liaison radio dans le cas où une mesure ou une détermination concernant l'au moins un paramètre de liaison radio indique une moins bonne qualité de liaison de communication radio par rapport à la valeur de seuil de l'indication de seuil de liaison radio (201),
- avant le début de l'étape de préparation, l'équipement utilisateur (20) reçoit une indication de liste de cellules radio (202), l'indication de liste de cellules radio (202) étant liée à un ensemble ou à une liste de cellules radio ou d'entités de station de base - cellules cibles potentielles - qui pourraient potentiellement desservir l'équipement utilisateur (20), après que la liaison de communication radio entre l'équipement utilisateur (20) et la première entité de station de base (111) est interrompue, dans lequel les cellules cibles potentielles comprennent une cellule cible commandée par la seconde entité de station de base (112), dans lequel - soit dans le cadre de l'étape de préparation de la procédure de défaillance de liaison radio, soit dans le cadre de la procédure de défaillance de liaison radio - l'indication de liste de cellules radio (202) est utilisée pour des mesures priorisées et l'établissement d'une liaison de communication radio après une défaillance de liaison radio avec la première entité station de base (111),
- après le début de l'étape de préparation, l'équipement utilisateur (20) initie la procédure de défaillance de liaison radio en cas de dégradation suffisamment forte de la liaison de communication radio vers et/ou depuis la première entité station de base (111) et sélectionne ensuite la cellule cible commandée par la seconde entité de station de base (112) et établit une liaison de communication radio avec la seconde entité de station de base,
**caractérisé en ce que** l'équipement utilisateur (20) est configuré pour recevoir au moins une information parmi l'indication de seuil de liaison radio (201) et l'indication de liste de cellules radio (202) à partir de la première entité de station de base (111) de manière dédiée.

10. Programme comprenant un code de programme lisible par ordinateur qui, lorsqu'il est exécuté sur un équipement utilisateur (20), amène l'équipement utilisateur (20) à exécuter un procédé selon l'une des revendications 1 à 7.

11. Support lisible par ordinateur comprenant des instructions qui, lorsqu'elles sont exécutées sur un équipement utilisateur (20), amènent l'équipement utilisateur (20) à exécuter un procédé selon l'une des revendications 1 à 7.
